# EUROPÄISCHE PATENTSCHRIFT

(11) **EP 3 058 305 B1**
(45) Veröffentlichungstag und Bekanntmachung des Hinweises auf die Patenterteilung: **11.04.2018**
(21) Anmeldenummer: 14777636.3
(22) Anmeldetag: 01.10.2014
(51) Int. Cl.: F28F 13/12, F28D 7/10, F24F 13/30, F24F 12/00, F28F 9/18, F28D 7/16, F28F 1/00, F28D 21/00, F28F 9/00

(54) **LUFT-LUFT-WÄRMETAUSCHE**
AIR-AIR HEAT EXCHANGER
ÉCHANGEUR DE CHALEUR AIR-AIR

(30) Priorität: 14.10.2013 DE 102013111290
(43) Veröffentlichungstag der Anmeldung: 24.08.2016
(73) Patentinhaber: Roos GmbH, 56154 Boppard (DE)
(72) Erfinder: ROOS, Christoph, 56154 Boppard (DE)
(74) Vertreter: Ter Meer Steinmeister & Partner
(86) Internationale Anmeldenummer: PCT/EP2014/071038
(87) Internationale Veröffentlichungsnummer: WO 2015/055435

(56) Entgegenhaltungen:
- EP-A2- 2 148 074
- DE-A1-102008 058 817
- US-A1- 2003 034 152

## Beschreibung

Die Erfindung betrifft einen Luft-Luft-Wärmetauscher für Belüftungsanlagen, gemäß dem Oberbegriff des Anspruchs 1.
Die heutigen Bauvorschriften verlangen bei beheizten Gebäuden Dichtigkeitswerte der Gebäudehüllen, die ein kontrolliertes Lüften notwendig machen. Mit dieser Lüftung wird verbrauchte, d.h. mit Schadstoffen und Feuchtigkeit angereicherte Luft nach außen transportiert und durch frische, sauerstoffhaltige Außenluft ersetzt. Früher geschah dies durch regelmäßiges Lüften über die Fenster und Außentüren, was häufig nicht in ausreichendem Maße erfolgen kann, etwa bei längeren Abwesenheitszeiten der Gebäudebewohner. Zudem wird durch das Lüften die aufgeheizte Raumluft gegen kalte Außenluft ausgetauscht, was wiederum Energieaufwand zum Erwärmen der Frischluft erfordert. Dies ist aus ökologischen Gründen und aus Kostengründen nachteilig.
Seit längerer Zeit sind verschiedene Arten von Lüftungsanlagen im Einsatz, die mit einer Wärmerückgewinnung arbeiten. Hierbei wird ein Teil des Energiegehalts der beheizten Abluft auf die zugeführte Frischluft übertragen. Dies geschieht in der Regel durch Kreuzstromwärmetauscher oder Rotationswärmetauscher mit hohem, apparativem Aufwand, der die Geräte relativ teuer macht. Eine weitere Variante sind sogenannte Reversierlüftungsgeräte, in denen ein Ventilator in bestimmten zeitlichen Abständen seine Drehrichtung und damit die Förderrichtung ändert und hierdurch zunächst ein Anteil der verbrauchten Raumluft nach außen geblasen wird, während dann anschließend im Gegenzug Frischluft nach innen geführt wird.
Gegenstromwärmetauscher sind beispielsweise aus DE 10 2006 051 003 A1, DE 10 2006 035 531 A1, DE 10 2005 045 734 A1, DE 10 2005 035 712 A1 und DE 10 2004 046 587 A1 und EP 2 077 428 A2 bekannt. Die deutsche Patentanmeldung DE 10 2008 058 817 A1, die den nächstliegenden Stand der Technik repräsentiert, offenbart einen Luft-Luft-Wärmetauscher, gemäß dem Oberbegriff des Anspruchs 1, der nach dem Gegenstromprinzip arbeitet und bei welchem ein erster Luftstrom in geschlossenen Rohren geführt wird, während ein zweiter Luftstrom, der dem ersten Luftstrom entgegen gesetzt ist, im Zwischenraum zwischen den Rohren und dem zylindrischen Außengehäuse angeordnet ist. Zur Förderung der entgegen gesetzten Luftströme dient ein Ventilator, der an einem Ende des zylindrischen Gehäuses angeordnet ist und einen Innenring und einen entgegengesetzt fördernden und konzentrisch um den Innenring angeordneten Außenring umfasst. Die Räume des Außenrings und des Innenrings sind voneinander durch eine zylindrische Wand getrennt. In einer Ausführungsform laufen die Rohre vom Ventilator ausgehend zunächst konisch auseinander, dann parallel und schließlich wieder konisch zusammen. Auf diese Weise werden die Rohre vom zweiten Luftstrom im Zwischenraum zwischen den Rohren umspült, so dass ein effizienter Wärmeaustausch stattfinden kann.

Die Konstruktion dieses Wärmetauschers ist jedoch verhältnismäßig aufwändig, so dass seine Herstellung kostenintensiv ist. Zudem wird nach Möglichkeiten gesucht, die Effizienz des Wärmetauschers noch weiter zu steigern.

Es ist daher eine Aufgabe der vorliegenden Erfindung, den vorstehend beschriebenen Wärmetauscher aus der DE 10 2008 058 817 A1 konstruktiv zu verbessern, insbesondere seine Konstruktion zu vereinfachen, so dass seine Herstellung kostengünstiger wird. Zugleich soll der weiterentwickelte Wärmetauscher den gleichen oder einen sogar noch höheren Wirkungsgrad als der aus dem Stand der Technik bekannte Wärmetauscher aufweisen.

Diese Aufgaben werden erfindungsgemäß durch einen Luft-Luft-Wärmetauscher mit den Merkmalen des Anspruchs 1 gelöst.

Der erfindungsgemäße Wärmetauscher umfasst ein Bündel gerader, parallel angeordneter Rohre, deren Endstücke auf der Seite, die dem Ventilator zugewandt ist, in dem ringförmigen Ende der zylindrischen Wand eingefasst sind, die die Räume des Außenrings und des Innenrings voneinander trennt, während die Endstücke der Rohre auf der gegenüberliegenden Seite im Ende eines entsprechenden zylindrischen Rohrstutzens eingefasst sind. Die Endstücke liegen hierbei dicht, also ohne Zwischenraum aneinander, so dass kein Luftstrom zwischen den benachbarten Endstücken durchströmen kann. Zwischen den Endstücken verjüngen sich die Rohre zu Mittelabschnitten, zwischen denen Zwischenräume innerhalb des Bündels vorhanden sind. Die Luft des Gegenstroms, also des sogenannten zweiten Luftstroms, kann somit in das Bündel eindringen und die Mittelabschnitte der Rohre frei umströmen. Die Innenwand des Gehäuses ist im Bereich dieser Mittelabschnitte durch einen hülsen- oder schalenförmigen Dämmeinsatz ausgekleidet, der beispielsweise einfach in das Gehäuse eingesetzt oder eingeschoben werden kann. Der Dämmeinsatz verringert den Innendurchmesser des Gehäuses und schnürt den Strömungsquerschnitt somit ein. Der zweite Luftstrom, der im Außenring geführt wird, wird durch diese Einschnürung nach innen geleitet, so dass er zwangsläufig die Rohre umströmen muss und hinter dem Dämmeinsatz wieder radial nach außen aus dem Rohrbündel austreten kann. Der Dämmeinsatz dient vorrangig zur Wärmedämmung und kann darüber hinaus die Funktion einer Schalldämmung aufweisen.

Die Führung des ersten Luftstroms innerhalb der Rohre wird dadurch vereinfacht, dass gerade und parallele Rohre verwendet werden können. Diese müssen lediglich mit entsprechend ausgeformten Endstücken versehen sein, die sich dicht zusammenfassen und in die zylindrische Wand bzw. den gegenüberliegenden Rohrstutzen einfassen lassen. Die Abdichtung benachbarter Endstücke gegeneinander kann durch Verkleben, Verschweißen oder dergleichen geschehen. Die Rohre selbst können beispielsweise aus handelsüblichen gezogenen Rohren gefertigt werden, deren Enden lediglich aufgeweitet und so geformt werden, dass sie sich in der vorstehend beschriebenen Weise ohne Zwischenräume zusammensetzen lassen. Es ist allerdings auch möglich, die Endstücke an jeweils einem Ende des Rohrbündels in einem einzigen einstückigen Bauteil zusammenzufassen, so dass die benachbarten Endstücke durch Trennwände voneinander getrennt sind und im Querschnitt eine Wabenstruktur bilden.

In einer bevorzugten Ausführungsform der vorliegenden Erfindung weist zumindest ein Teil der Endstücke einen polygonalen Querschnitt auf. Die Seiten der Polygone bilden dann die Kontaktflächen bzw. Trennflächen der Endstücke untereinander.

Vorzugsweise ist dieser polygonale Querschnitt der Endstücke ein Sechseck.

Weiter vorzugsweise werden zumindest die Endstücke jeweils an einem Ende des Bündels einstückig aus einem Spritzgussteil gebildet und bilden innerhalb dieses Spritzgussteils eine Wabenstruktur.

In diesem Spritzgussteil können an die Endstücke vorzugsweise Anschlussstücke zur Aufnahme von Rohrabschnitten angeformt sein, die die Mittelabschnitte bilden. Das Spritzgussteil kann ferner den ringförmigen Endabschnitt der zylindrischen Wand bzw. des Rohrstutzens umfassen, der die Endstücke einfasst.

Weiter vorzugsweise weisen die Mittelabschnitte der Rohre an ihrer Innenseite und/oder an ihrer Außenseite eine strukturierte Oberfläche auf. Diese sorgt für Turbulenzen, die die Wärmeübertragung zwischen den Luftströmen verbessern. Solche Strukturen können beispielsweise durch Sicken oder Vorsprünge an den Rohroberflächen gebildet werden.

Gemäß einer weiteren Ausführungsform der Erfindung sind die Endstücke miteinander, mit dem ringförmigen Ende der zylindrischen Wand und/oder mit dem Ende des gegenüberliegenden zylindrischen Rohrstutzens durch Kleben oder Schweißen dicht verbunden.

Weiter vorzugsweise weist der Dämmeinsatz Endflächen mit abgeschrägtem Querschnitt auf, über welche der Innendurchmesser des Dämmeinsatzes in den größeren Innendurchmesser die benachbarten Innenwandabschnitte des Gehäuses übergeht. Vom Ventilator aus strömt somit der zweite Luftstrom durch den Außenring zunächst gegen eine dieser abgeschrägten Endflächen an einer Stirnseite des Dämmeinsatzes und wird über diese nach innen in das Rohrbündel gedrückt. Der Dämmeinsatz erstreckt sich über einen Längenabschnitt des Bündels, der ausreichend ist, um für einen effizienten Wärmeaustausch zwischen den Luftströmen zu sorgen. Am Ende des Dämmeinsatzes erweitert sich der Strömungsquerschnitt wiederum über eine abgeschrägte Endfläche, die den zweiten Luftstrom wieder nach außen um den zylindrischen Rohrstutzen führt, der die dem Ventilator gegenüberliegenden Endstücke der Rohre einfasst.

Weiter vorzugsweise weist die Innenwand des Gehäuses eine strukturierte Oberfläche auf. Diese sorgt für Turbulenzen, die eine noch bessere Wärmeübertragung zwischen den Luftströmen zur Folge haben.

Gemäß einer weiteren bevorzugten Ausführungsform besteht der Dämmeinsatz aus expandiertem Kunststoff.

Im folgenden werden bevorzugte Ausführungsformen der vorliegenden Erfindung anhand der Zeichnung näher erläutert.
- Fig. 1 und 2: sind schematische Längsschnitte durch eine Ausführungsform des erfindungsgemäßen Luft-Luft-Wärmetauschers, und
- Fig. 3 und 4: sind Draufsichten auf die Enden eingefassten Rohrbündels innerhalb des Wärmetauschers aus den Fig. 1 und 2.

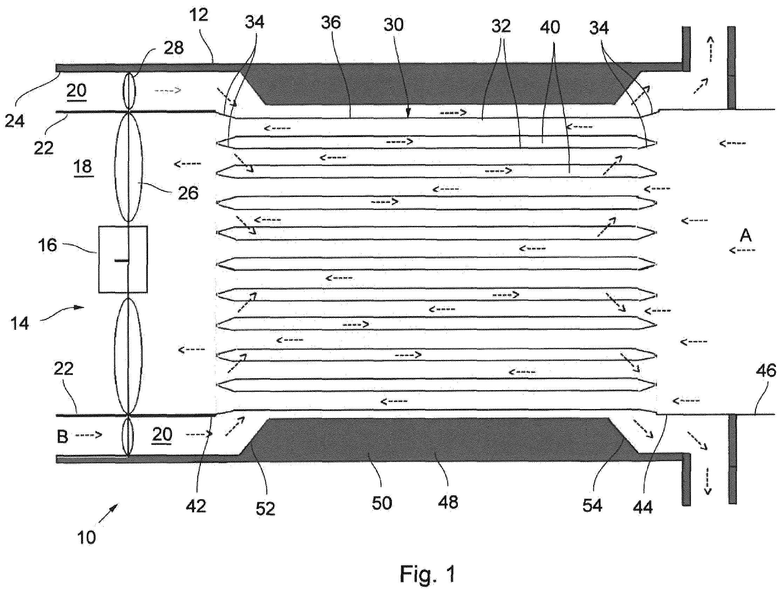

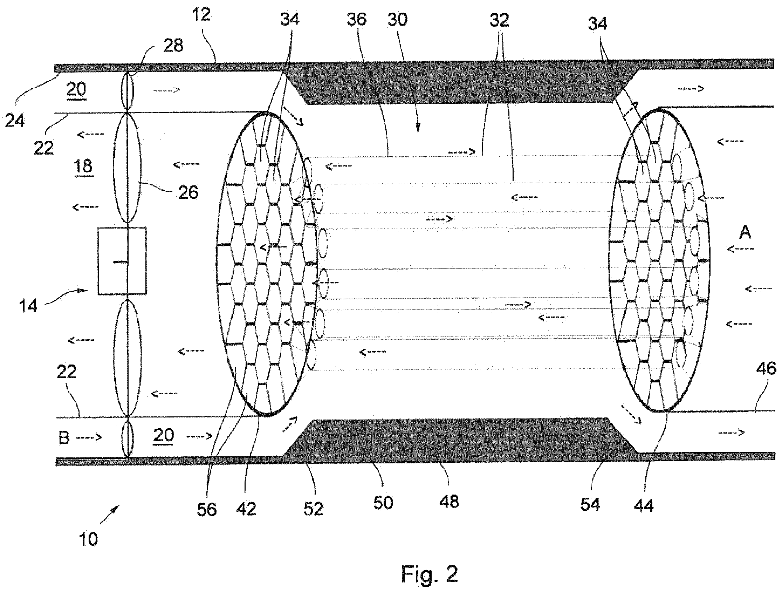

Der in den Fig. 1 und 2 dargestellte Wärmetauscher 10 ist ein Luft-Luft-Wärmetauscher mit einem zylindrischen Gehäuse 12, das an seinen Enden offen ist. An einem Ende des Gehäuses 12 (in den Figuren links) ist ein Ventilator 14 in das Gehäuse 12 eingesetzt. Die Rotationsachse des Ventilators 14 entspricht der Rohrachse des Gehäuses 12. Der Begriff "zylindrisch" soll in Bezug auf das Gehäuse 12 nicht ausschließlich eine exakte Zylinderform bezeichnen, sondern es sind auch Abweichungen hiervon möglich, zum Beispiel ein polygonaler Querschnitt.

Der Ventilator 14 wird durch einen Motor 16 angetrieben, der auf seiner Mittelachse sitzt. Der Raum um den Motor 16 herum bildet einen Innenring 18, um welchen herum wiederum ein Außenring 20 angeordnet ist, der den Innenring 18 umschließt. Der Innenring 18 und der Außenring 20 sind durch eine zylindrische Wand 22 voneinander getrennt. Nach außen wird der Außenring 20 durch die Innenwand 24 des Gehäuses 12 begrenzt.

Im Innenring 18 und im Außenring 20 werden Luftströme in entgegengesetzter Richtung gefördert. Der Luftstrom im Innenring 18 soll im folgenden als erster Luftstrom bezeichnet werden, durch welchen die Luft aus dem Gehäuse 12 an dem Ende des Wärmetauschers 10 gefördert wird, an welchem der Ventilator 14 angeordnet ist. Hingegen wird im Außenring 20 ein zweiter Luftstrom gefördert, durch welchen die Luft an dem mit dem Ventilator versehenen Ende in den Wärmetauscher 10 hinein gefördert wird.

Zur Förderung dieser entgegengesetzten Luftströme erstreckt sich das Förderrad des Ventilators 14 radial nach außen bis in den Außenring 20 hinein. Die Flügel 26 des Innenrings 18 sind den Flügeln 28 des Außenrings 20 entgegengesetzt gestellt, so dass bei der Rotation des Ventilators 14 die Luft in den jeweiligen Ringen 18, 20 in entgegengesetzte Richtungen befördert werden kann und der erste und der zweite Luftstrom erzeugt werden, wie vorstehend beschrieben.

Die Anordnung des Ventilators 14, des Innenrings 18 und des Außenrings 20 und der trennenden zylindrischen Wand 22 ist im wesentlichen bereits aus der deutschen Patentanmeldung DE 10 2008 058 817 A1 bekannt.

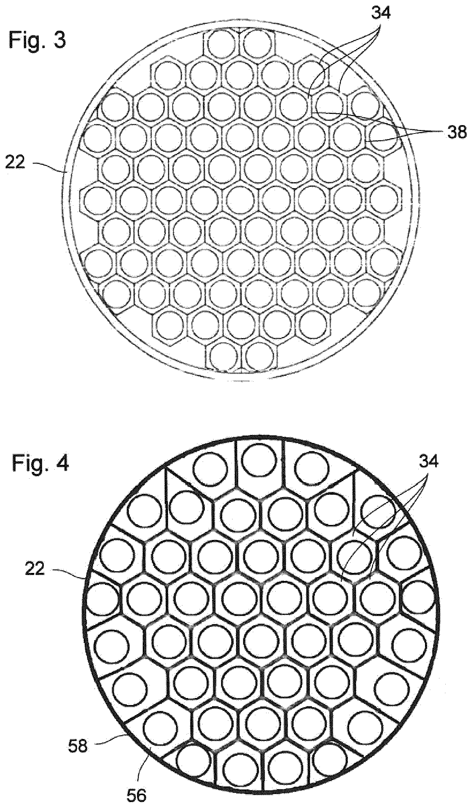

Innerhalb des Wärmetauschers 10 tauschen die entgegengesetzten Luftströme Wärme miteinander aus, werden jedoch in getrennten Strukturen geführt, so dass sich die beiden Luftströme nicht miteinander vermischen können. Diese Strukturen umfassen ein zentrales Rohrbündel 30, das eine Anzahl gerader, parallel angeordneter Rohre 32 umfasst. Die Endstücke 34 dieser Rohre 32 weisen eine Querschnitt auf, der von dem Querschnitt der Mittelabschnitte 36 der Rohre 32 zwischen den Endstücken 34 abweicht. Während nämlich die Mittelabschnitte 36 im vorliegenden Fall einen kreisförmigen Querschnitt aufweisen, sind die Endstücke 34 zu einem polygonalen Querschnitt aufgeweitet. In der Draufsicht in den Fig. 3 und 4 ist zu erkennen, dass es sich bei diesem polygonalen Querschnitt um ein regelmäßiges Sechseck handelt. Aufgrund dieser Form können die Endstücke 34 zu einer regelmäßigen Bienenwabenstruktur zusammengesetzt werden, wie in den Fig. 3 und 4 leicht ersichtlich ist. Zwischen den Endstücken 34 verbleiben dann keine Zwischenräume mehr, da die Endstücke 34 dicht zusammengefasst sind, und es kann keine Luft mehr zwischen ihnen durchströmen.

Die Endstücke 34 können beispielsweise in einem einzigen Spritzgussteil aus Kunststoff einstückig zusammengefasst sein, das im Querschnitt die Bienenwabenstruktur aufweist. Dieses Spritzgussteil kann auch noch weitere Anschlusskomponenten umfassen, wie etwa Anschlussstücke zur Aufnahme von Rohrabschnitten, die die Mittelabschnitte 36 bilden. Auf oder in diese Anschlussstücke können die Enden der Mittelabschnitte auf- oder eingeklebt sein oder auf- bzw. eingesteckt sein.

Wie insbesondere in Fig. 1 erkennbar ist, liegen die Mittelabschnitte 36 der Rohre 32 innerhalb des Bündels 30 nicht dicht aneinander. Vielmehr sind Zwischenräume 40 zwischen diesen Mittelabschnitten 36 vorhanden, die von Luft durchströmt werden können.

Auf der Seite des Ventilators 14 sind die Endstücke 34 der Rohre 32 dicht in dem ringförmigen Ende 42 der zylindrischen Wand 22 eingefasst, welche den Innenring 18 und den Außenring 20 voneinander trennt. Der Ausdruck "dicht" soll auch hier bezeichnen, dass keine Luft seitlich am Rohrbündel 30 vorbeistreichen kann, sondern dass vielmehr eine strömungsdichte Einfassung des Bündels 30 innerhalb des ringförmigen Endes 42 der Wand 22 gewährleistet ist. In gleicher Weise sind die entgegengesetzten Endstücke 34 auf der Seite des Wärmetauschers 10, die dem Ventilator 14 gegenüberliegt (also auf der rechten Seite in Fig. 1), in dem Ende 44 eines zylindrischen Rohrstutzens 46 eingefasst, dessen Durchmesser etwa der zylindrischen Wand 22 entspricht. Auch diese Einfassung des Rohrbündels 30 erfolgt strömungsdicht, d.h., der zylindrische Rohrstutzen 46 umschließt das Rohrbündel 30 derart, dass keine Luft am Bündel 30 vorbeistreichen kann. Es versteht sich, dass auch an diesem Ende die Endstücke 34 strömungsdicht zusammenliegend eingefasst sind. Das ringförmige Ende 42 der zylindrischen Wand 22 und/oder das Ende 44 eines zylindrischen Rohrstutzens 46 können ebenfalls durch das Spritzgussteil gebildet werden, das die Wabenstruktur zur Bildung der Endstücke 34 umfasst, wie oben beschrieben.

Der zylindrische Rohrstutzen 46 ist zu der dem Ventilator 14 abgewandten Seite des Wärmetauschers 10 hin offen. Wie in Fig. 1 durch Pfeile A angedeutet, wird die Luft durch den Betrieb des Ventilators 14 in dem ersten Luftstrom durch diese Öffnung eingesogen, dringt durch die Endstücke 34 in das Rohrbündel 30 ein, wird in die Rohre 32 geleitet und tritt durch die dem Ventilator 14 zugewandten Endstücke 34 in den Raum des Innenrings 18 ein, wo sie den Ventilator 14 durchströmt und schließlich aus dem Gehäuse 12 austreten kann. Der erste Luftstrom wird somit im Inneren des Wärmetauschers 12 durch das Rohrbündel 30 gefördert.

Hingegen wird der entgegensetzte zweite Luftstrom so durch das Gehäuse 12 gefördert, dass er in das Rohrbündel 30 eintritt und die Mittelabschnitte 36 der einzelnen Rohre 32 umstreicht, so dass ein Wärmeaustausch stattfinden kann. Im einzelnen wird der zweite Luftstrom von links (Pfeile B) durch die äußeren Flügel 28 des Ventilators 14 in den Au-ßenring 20 hineingezogen, durch eine Einschnürung 48 der Innenwand 24 des Gehäuses 12 nach innen zwischen die Rohre 32 des Rohrbündels 30 geleitet und am Ende des Rohrbündels 30 wieder nach außen um den zylindrischen Rohrstutzen 46 herum geleitet, so dass der zweite Luftstrom schließlich radial nach außen austreten kann.

Die Einschnürung 48 wird durch eine zylindrische Dämmhülse 50 gebildet, die die Innenwand 24 des Gehäuses 12 im Bereich der Mittelabschnitte 36 auskleidet und den Innendurchmesser des Gehäuses 12 reduziert. Denkbar ist auch, die Einschnürung 48 durch eine oder mehrere gewölbte Dämmschalen zu bilden, die an der Innenwand des Gehäuses 12 anliegen. Die Stirnseiten dieser Dämmhülse 50 werden durch Endflächen 52, 54 mit einem abgeschrägten Querschnitt gebildet, über welchen der Innendurchmesser der Dämmhülse 50 in den größeren Innendurchmesser die benachbarten Innenwandabschnitte des Gehäuses 12 übergeht. Die Endflächen 52, 54 leiten den zweiten Luftstrom radial nach innen bzw. außen. Vom Außenring 20 aus trifft der zweite Luftstrom somit zunächst auf eine erste Endfläche 52 der Dämmhülse 50, über welche der zweite Luftstrom zwischen die Rohre 32 des Bündels 30 geleitet wird. Zweckmäßigerweise ist der Innenquerschnitt der Dämmhülse 50 nur unwesentlich größer als derjenige des Rohrbündels 30, so dass das Bündel 30 in die Dämmhülse 50 eingepasst ist. Innerhalb der Dämmhülse 50 strömt der zweite Luftstrom somit zwischen den Rohren 32. Am Ende des Bündels 30 wird der zweite Luftstrom über die abschließende Endfläche 54 wieder nach außen um den zylindrischen Rohrstutzen 46 herum geleitet.

Die Dämmhülse 50 bietet den zusätzlichen Vorteil einer Verringerung der Energieverluste nach außen. Außer der Wärmedämmung kann die Dämmschale 50 zusätzlich eine Schalldämmung gewährleisten. Diese Vorteile gelten entsprechend für eine Dämmschale. Die Dämmhülse 50 besteht beispielsweise aus expandiertem Kunststoff, wie etwa Polystyrol oder Polypropylen. Auch andere Kunststoffe, wie z.B. PVC, sind geeignet.

Die Innenwand 24 des Gehäuses 12 kann eine strukturierte Oberfläche aufweisen, also beispielsweise mit Sicken oder dergleichen versehen sein, so dass der zweite Luftstrom verwirbelt wird. Dies führt zu einer weiteren Verbesserung des Wärmeübergangs. Ferner können die Mittelabschnitte 36 der Rohre 34 an ihrer Innenseite und/oder an ihrer Außenseite eine strukturierte Oberfläche aufweisen. Diese Strukturen können beispielsweise durch Sicken oder Vorsprünge an den jeweiligen Oberflächen gebildet werden. Die Strukturen können ferner dazu dienen, den Luftstrom umzuleiten.

Bei den Rohren 32 kann es sich auch um gewöhnliche gezogene Rohre mit zylindrischem Querschnitt handeln, die an ihren Enden zu einem polygonalen Querschnitt aufgeweitet werden, so dass die Endstücke 34 gebildet werden. Diese müssen dann lediglich zusammengesetzt und miteinander verschweißt oder verklebt werden, um das Rohrbündel zu bilden.

Um einen guten Abschluss mit der ringförmigen Einfassung durch das Ende 42 der zylindrischen Wand 22 und das Ende 44 des Rohrstutzens 46 zu gewährleisten, können die Querschnitte der außen im Bündel 30 liegenden Endstücke 34 von denjenigen im Inneren des Bündels 30 abweichen. In den Fig. 2 und 4 ist dies deutlich erkennbar. Hier sind außen liegende Endstücke vorhanden, wie etwa dasjenige, das stellvertretend mit der Bezugsziffer 56 bezeichnet ist, die vom dem sechseckigen Querschnitt der übrigen Endstücke 34 in der Mitte des Bündels 30 abweichen. Eine abgerundete Außenfläche 58 dieses Endstücks 56 dient in diesem Fall als Kontaktfläche zur zylindrischen Wand 22 bzw. dem Rohrstutzen 46. Durch die Außenkonturen der außen liegenden Endstücke 34 lässt sich somit ein kreisförmiger Umfang des Bündels 30 an seinen Enden nachbilden, der sich genau in die zylindrische Wand 22 und den Rohrstutzen 46 einpassen lässt.

## Patentansprüche

1. Luft-Luft-Wärmetauscher (10) für Belüftungsanlagen, mit zwei im Gegenstrom geführten Luftströmen, die in einem zylindrischen Gehäuse (12) angeordnet sind, in dessen Innerem der erste Luftstrom innerhalb des Wärmetauschers (10) in geschlossenen Rohren verläuft, während der zweite Luftstrom im Zwischenraum (40) zwischen den Rohren und dem zylindrischen Gehäuse (12) verläuft und einem die entgegengesetzten Luftströme fördernden Ventilator (14), der an einem Ende des zylindrischen Gehäuses (12) angeordnet ist,
wobei der Ventilator (14) einen Innenring (18) und einen entgegengesetzt fördernden und konzentrisch um den Innenring (18) angeordneten Außenring (20) umfasst und die Räume des Außenrings (20) und des Innenrings (18) voneinander durch eine zylindrische Wand (22) getrennt sind, wobei ein Bündel (30) gerader, parallel angeordneter Rohre (32), deren Endstücke (34) auf der dem Ventilator (14) zugewandten Seite in einem ringförmigen Ende (42) der zylindrischen Wand (22) und auf der gegenüber liegenden Seite im Ende (44) eines zylindrischen Rohrstutzens (46) dicht zusammenliegend eingefasst sind **dadurch gekennzeichnet, dass** sich zwischen ihren Endstücken (34) zu Mittelabschnitten (36) verjüngen, zwischen denen innerhalb des Bündels (30) die Zwischenräume (40) vorhanden sind, sowie durch einen hülsen- oder schalenförmigen Dämmeinsatz (50), der die Innenwand (24) des Gehäuses (12) im Bereich der Mittelabschnitte (36) auskleidet und den Innendurchmesser des Gehäuses (12) einschnürt.

2. Luft-Luft-Wärmetauscher nach Anspruch 1, **dadurch gekennzeichnet, dass** zumindest ein Teil der Endstücke (34) einen polygonalen Querschnitt aufweist.

3. Luft-Luft-Wärmetauscher nach Anspruch 2, **dadurch gekennzeichnet, dass** der polygonale Querschnitt ein Sechseck ist.

4. Luft-Luft-Wärmetauscher nach einem der vorhergehenden Ansprüche, **dadurch gekennzeichnet, dass** zumindest die Endstücke (34) jeweils an einem Ende des Bündels (30) einstückig aus einem Spritzgussteil gebildet werden und innerhalb dieses Spritzgussteils eine Wabenstruktur bilden.

5. Luft-Luft-Wärmetauscher nach Anspruch 4, **dadurch gekennzeichnet, dass** an die Endstücke (34) Anschlussstücke zur Aufnahme von Rohrabschnitten angeformt sind, die die Mittelabschnitte (36) bilden.

6. Luft-Luft-Wärmetauscher nach einem der vorhergehenden Ansprüche, **dadurch gekennzeichnet, dass** die Mittelabschnitte (36) der Rohre (32) an ihrer Innenseite und/oder an ihrer Außenseite eine strukturierte Oberfläche aufweisen.

7. Luft-Luft-Wärmetauscher nach einem der Ansprüche 1 bis 3, **dadurch gekennzeichnet, dass** die Endstücke (34) miteinander, mit dem ringförmigen Ende (42) der zylindrischen Wand (22) und/oder mit dem Ende (44) des gegenüber liegenden zylindrischen Rohrstutzens (46) durch Kleben oder Schweißen dicht verbunden sind.

8. Luft-Luft-Wärmetauscher nach einem der vorhergehenden Ansprüche, **dadurch gekennzeichnet, dass** der Dämmeinsatz (50) Endflächen (52, 54) mit abgeschrägtem Querschnitt aufweist, über welche der Innendurchmesser des Dämmeinsatzes (50) in den größeren Innendurchmesser der benachbarten Innenwandabschnitte des Gehäuses (12) übergeht.

9. Luft-Luft-Wärmetauscher nach einem der vorhergehenden Ansprüche, **dadurch gekennzeichnet, dass** die Innenwand (24) des Gehäuses (12) eine strukturierte Oberfläche aufweist.

10. Luft-Luft-Wärmetauscher nach einem der vorhergehenden Ansprüche, **dadurch gekennzeichnet, dass** der Dämmeinsatz (50) aus expandiertem Kunststoff besteht.

## Claims

1. Air-to-air heat exchanger (10) for ventilation systems with two countercurrent air flows disposed inside a cylindrical housing (12) inside which the first air flow circulates in closed pipes inside heat exchanger (10) whilst the second air flow flows in the space (40) between the pipes and the cylindrical housing (12), and a fan (14) for moving the countercurrent air flows, which is disposed at one end of cylindrical housing (12),
with fan (14) comprising an inner ring (18) and an outer ring (20) arranged concentrically around inner ring (18) for moving in the opposite direction, and the spaces occupied by outer ring (20) and inner ring (18) being separated from each other by a cylindrical wall (22),
with a bunch (30) of straight, parallel pipes (32), whose end elements (34) at the end closest to fan (14) are tightly disposed together and enclosed in a ring-shaped end (42) of cylindrical wall (22) and, at the opposite side, are tightly disposed together and enclosed in the end (44) of a cylindrical pipe fitting (46), **characterised**
**in that** between end elements (34), they taper to form middle sections (36), between which there are spaces (40) inside bunch (30),
and by a sleeve or cup-shaped insulating insert (50) which lines the inner wall (24) of housing (12) in the vicinity of middle sections (36) and constricts the inner diameter of housing (12),

2. Air-to-air heat exchanger according to claim 1, **characterised in that** at least some of the end elements (34) have a polygonal cross-section.

3. Air-to-air heat exchanger according to claim 2, **characterised in that** the polygonal cross-section is a hexagon.

4. Air-to-air heat exchanger according to one of the preceding claims, **characterised in that** at least end elements (34) at each end of bunch (30) are made as one piece from an injection-moulded part and form a honeycomb structure inside this injection-moulded part.

5. Air-to-air heat exchanger according to claim 4, **characterised in that** formed onto end elements (34) there are connecting pieces for receiving pipe sections forming middle sections (36).

6. Air-to-air heat exchanger according to one of the preceding claims, **characterised in that** the middle sections (36) of pipes (32) have a structured surface on their inside and/or outside.

7. Air-to-air heat exchanger according to one of claims 1 to 3, **characterised in that** end elements (34) are tightly connected together, with the ring-shaped end (42) of cylindrical wall (22) and/or with the end (44) of the opposite cylindrical pipe fitting (46) by means of bonding or welding.

8. Air-to-air heat exchanger according to one of the preceding claims, **characterised in that** insulating insert (50) has end surfaces (52,54) with a sloping cross-section, via which the inner diameter of insulating insert (50) transitions into the larger inner diameter of the adjacent inner wall sections of housing (12).

9. Air-to-air heat exchanger according to one of the preceding claims, **characterised in that** inner wall (24) of housing (12) has a structured surface.

10. Air-to-air heat exchanger according to one of the preceding claims, **characterised in that** the insulating insert (50) is made from expanded plastic.

## Revendications

1. Echangeur de chaleur air-air (10) pour des installations de ventilation, comportant deux écoulements d'air guidés à contre-courant qui sont disposés dans un boîtier cylindrique (12) à l'intérieur duquel le premier écoulement d'air s'étend à l'intérieur de l'échangeur de chaleur (10) dans des tubes fermés, alors que le second écoulement d'air s'étend dans l'espace (40) entre les tubes et le boîtier cylindrique (12), et un ventilateur (14) mettant en circulation les écoulements d'air opposés, qui est agencé sur une extrémité du boîtier cylindrique (12),
dans lequel le ventilateur (14) comporte une bague intérieure (18) et une bague extérieure (20) agencée de manière à avoir une direction de circulation opposée à celle de la bague intérieure (18) et de manière concentrique autour de celle-ci, et les espaces de la bague extérieure (20) et de la bague intérieure (18) sont séparés l'un de l'autre par une paroi cylindrique (22),
dans lequel un faisceau (30) de tubes (32) droits et agencés parallèlement, dont les pièces d'extrémité (34) sont enfermées ensemble de manière étanche sur le côté dirigé vers le ventilateur (14) dans une extrémité annulaire (42) de la paroi cylindrique (22) et sur le côté opposé dans l'extrémité (44) d'un support de tube cylindrique (46),
**caractérisé en ce que** les tubes s'amincissent entre leurs pièces d'extrémité (34) jusqu'à des parties centrales (36) entre lesquelles il existe des espaces (40) à l'intérieur du faisceau (30), ainsi que par un insert isolant en forme de manchon ou de cuvette (50), qui revêt la paroi intérieure (24) du boîtier (12) dans la zone de la partie centrale (36) et qui rétrécit le diamètre intérieur du boîtier (12).

2. Echangeur de chaleur air-air selon la revendication 1, **caractérisé en ce qu'**au moins une partie des pièces extrémité (34) a une section transversale polygonale.

3. Echangeur de chaleur air-air selon la revendication 2, **caractérisé en ce que** la section transversale polygonale est un hexagone.

4. Echangeur de chaleur air-air selon l'une des revendications précédentes, **caractérisé en ce qu'**au moins les pièces d'extrémité (34) sont respectivement formées d'un seul tenant à une extrémité du faisceau (30) à partir d'une pièce moulée par injection et forment une structure en nid d'abeille à l'intérieur de cette pièce moulée par injection.

5. Echangeur de chaleur air-air selon la revendication 4, **caractérisé en ce que** des pièces de raccordement sont formées sur les pièces d'extrémité (34) pour recevoir des tronçons de tube qui forment la partie centrale (36).

6. Echangeur de chaleur air-air selon l'une des revendications précédentes, **caractérisé en ce que** les parties centrales (36) des tubes (32) comportent une surface texturée sur leur côté intérieur et/ou sur leur côté extérieur.

7. Echangeur de chaleur air-air selon l'une des revendications 1 à 3, **caractérisé en ce que** les pièces d'extrémité (34) sont reliées de manière étanche les unes aux autres par collage ou soudage, avec l'extrémité annulaire (42) de la paroi cylindrique (22) et/ou avec l'extrémité (44) du support de tube (46) cylindrique opposé.

8. Echangeur de chaleur air-air selon l'une des revendications précédentes, **caractérisé en ce que** l'insert isolant (50) a des faces d'extrémité (52, 54) ayant une section transversale biseautée, par l'intermédiaire desquelles le diamètre intérieur de l'insert isolant (50) passe au diamètre intérieur plus grand des parties de paroi intérieures adjacentes du boîtier (12).

9. Echangeur de chaleur air-air selon l'une des revendications précédentes, **caractérisé en ce que** la paroi intérieure (24) du boîtier (12) a une surface texturée.

10. Echangeur de chaleur air-air selon l'une des revendications précédentes, **caractérisé en ce que** l'insert isolant (50) est constitué d'une matière plastique expansée.
